# EUROPEAN PATENT APPLICATION

(11) **EP 0 535 609 A2**
(43) Date of publication of application: **07.04.1993**
(21) Application number: 92116678.1
(22) Date of filing: 29.09.1992
(51) Int. Cl.: G06F 15/68

(54) **Branch deletion method for thinned image**

(30) Priority: 01.10.1991 JP 280439/91
(71) Applicant: EZEL INC., Setagaya-ku Tokio 155 (JP)
(72) Inventor: Matsumoto, Koji, c/o Ezel Inc., Tokyo 112 (JP); Oosaka, Manabu, c/o Ezel Inc., Tokyo 112 (JP)
(74) Representative: Grünecker, Kinkeldey, Stockmair & Schwanhäusser Anwaltssozietät

(57) **Abstract**

The present invention has an object to provide an image processing method for generating an image through thinning from which the topological characteristics can be extracted more precisely and more accurately by deleting thin needless line, what is to say the break of line.

A branch deletion method comprising steps of: i) extracting a branch point and an end point of a thinned image; ii) separating a branch from a main body of the thinned image on the branch point; iii) extracting a branch part with an end point and with the length equal to or less than the predetermined one; iv) deleting the branch part extracted in iii) from the thinned image.

## Description

### FIELD OF THE INVENTION

The present invention relates to the method for obtaining a better image after image processing.

### BACKGROUND OF THE INVENTION

Though a lot of method is proposed for thinning because of its effectiveness for clarifying the topological characteristics of an image, undesirable defect such as thin needless line, break of line, or shrinking are also generated simultaneously. Consequently, the image through thinning is far from the ideal one.

### SUMMARY OF THE INVENTION

The present invention is invented so as to solve the above conventional problems and has an object to provide an image processing method for generating an image through thinning from which the topological characteristics can be extracted more precisely and more accurately by deleting thin needless line, what is to say the break of line.

The branch deletion method for thinned image which relates to the present invention extracts a branch point and end point of a thinned image, breaks the line on the branch point, and deletes a short line including end point in the image whose branch point is broken.

It is possible to generate an image through thinning, whose topological characteristics is clarified by the present invention.

### BRIEF DESCRIPTION OF THE DRAWINGS

Figure 1 shows a flowchart of an embodiment of the branch deletion method for thinned image of the present invention.

Figure 2 shows a thinned image.

Figure 3 shows an image that branches of Figure 2 are separated from the main body on branch points.

Figure 4 shows an image of branches to be deleted.

Figure 5 shows another thinned image.

Figure 6 shows an image that branches of Figure 5 are deleted.

### PREFERRED EMBODIMENT OF THE PRESENT INVENTION

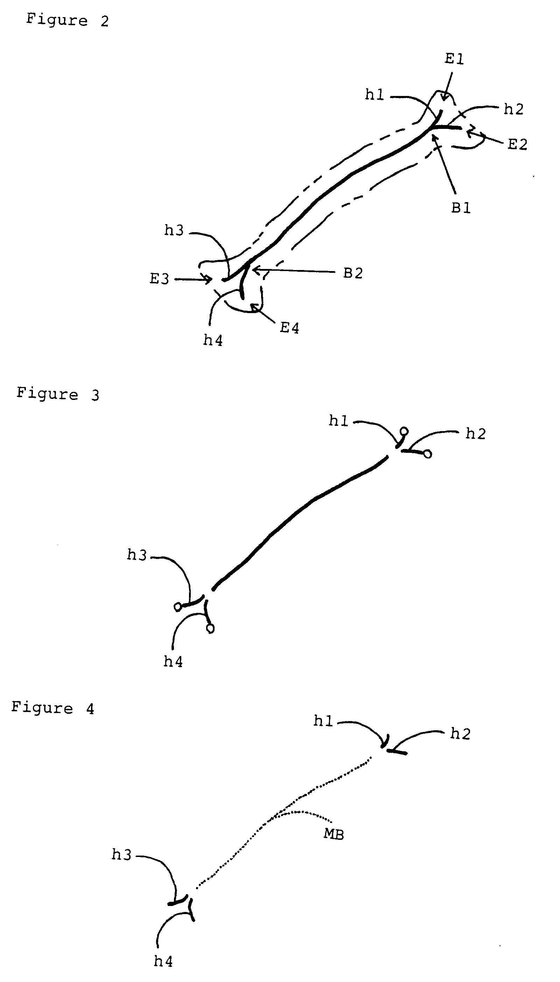

Hereinafter, an embodiment of the branch deletion method for thinned image relates to the present invention is described with reference to the attached drawings. Figure 2 shows a simple thinned image. Performing thinning on an almost straight and the same width of image (shown by the chain double-dashed line), thin needless lines of "h1", "h2", "h3" and "h4" are generated on the both of the end parts. The thin needless lines "h1" and "h2" are the branches starting from the branch point "B1", whose end points are "E1" and "E2", respectively. The thin needless lines "h3" and "h4" are the branches starting from the branch point "B2", whose end points are "E3" and "E4", respectively.

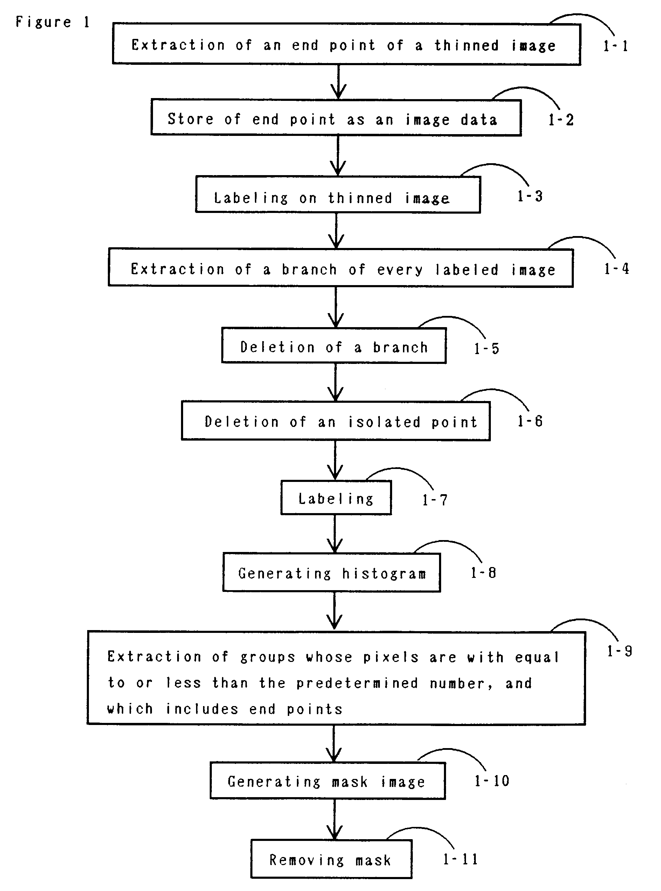

The processing of deletion of the above needless lines of the thinned image is described with reference to the flowchart in Figure 1 which is an embodiment of branch deletion method relates to the present invention.

On step 1-1, end points from "E1" to "E4" of the thinned image are extracted. The end points can be easily extracted by judging patterns of 3× 3 convolutions. The extracted end point is registered in an image memory as an image data on step 1-2.

On the other hand, the thinned image is labeled on step 1-3. It is possible to identify each thinned image. When a branch is deleted with respect to only thinned image as in Figure 2, this labeling is pointless. However, actually, there are many cases that a plural number of thinned images are in an image end labeling is effective processing. Branch points of each labeled image are extracted on step 1-4 and the branch points are deleted on step 1-5. Figure 3 shows that the branch points are cut off from the thinned image in Figure 2: thin needless lines from "h1" to "h4" are separated from the line. Here, isolated points are deleted on step 1-6 and minute needless lines are deleted. Labeling is performed again in order to identify each thin needless line on step 1-7.

In Figure 3, thin needless lines from "h1" to "h4" include the end points described above. (The end points are shown with the mark " ⃝ ".) The substitute difference between "h1" to H4" and the main body "MB" depends on whether an end point is included or not. A histogram of the labeled image in Figure 3 is generated on step 1-8. The number of pixels of each group is counted by the histogram. It is equivalent to measurement of the length in thinned image. According to the histogram and end point data described above (step 1-2), it is extracted an image of line including an end point with equal to or less than the predetermined number of pixels on step 1-9.

From the image in Figure 2, the image extracted through the processing is only thin needless line as shown in Figure 4, that is, the main body "MB is not shown in it. Generating a mask image by the image of only needless line on step 1-10, masking is performed on the original thinned image using the mask image. There are two methods for masking: one is that bit wise AND operation is performed on the original thinned image by a mask image whose density of thin needless line is decided "0" and the density of other parts are decided "FF", another is that the main body of the original image is selectively output by controlling multiplexer using mask image.

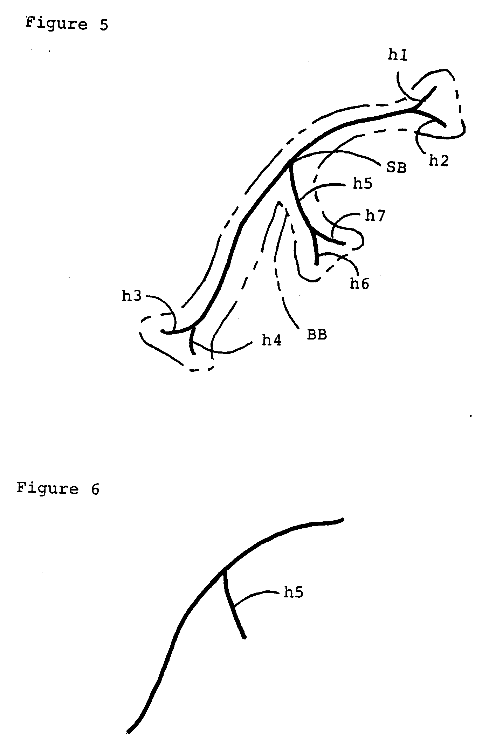

Concerning to the original image with branch "BB" as shown in Figure 5, the branch "h5" (generally belongs to a thin needless line) generated because of the existence of branch "BB" should not be deleted. Most of such thin needless lines do not include end points and one rather long. Therefore, the branch can be excepted from the objects to be deleted by evaluating the length and the end point through steps from 1 to 9.

In Figure 5, thin needless lines "h6" and "h7" are generated, which should be deleted. They are deleted by masking and the image in Figure 6 is generated.

The thin needless lines including end points are deleted by the first deletion. In Figure 6, "h5" itself without branches can be a branch. When "h5" is short branch, it can be deleted by the second deletion.

As mentioned above, it is possible to generate a thinned image clarified the topological characteristics because the steps for it are: i) branches and end points of thinned image are extracted, ii) in the thinned image, a thin needless line is separated from the branch point, iii) the separated short line is deleted with the end point.

## Claims

1. A branch deletion method comprising steps of:
i) extracting a branch point and an end point of a thinned image;
ii) separating a branch from a main body of said thinned image on said branch point;
iii) extracting a branch part with an end point and with the length equal to or less than the predetermined one;
iv) deleting said branch part extracted in iii) from said thinned image.

2. A branch deletion method claimed in Claim 1, comprising steps of:
i) generating a mask image of only branch part;
ii) deleting a branch part by masking a thinned image with said mask in i).
